# EUROPEAN PATENT APPLICATION

(11) **EP 3 355 195 A1**
(43) Date of publication of application: **01.08.2018**
(21) Application number: 17163160.9
(22) Date of filing: 27.03.2017
(51) Int. Cl.: G06F 11/07, G06F 11/30

(54) **METHOD AND SYSTEM FOR RESOLVING FAULTS IN A VIRTUAL DESKTOP ENVIRONMENT**

(30) Priority: 31.01.2017 IN 201741003646
(71) Applicant: Wipro Limited, 560 035 Karnataka (IN)
(72) Inventor: KAKARAPARTHI, Narasimha Sekhar, Hyderabad (IN)
(74) Representative: Finnegan Europe LLP

(57) **Abstract**

The present disclosure relates to a method and system of resolving faults in a virtual desktop environment. The method includes receiving, by a central monitor of a data center, a plurality of fault reports from one or more client devices. A fault report of the plurality of fault reports includes at least one fault detected by an agent running in a client device of the client devices. The client device operates a virtual desktop provisioned at virtual desktop site. The at least one fault detected in the virtual desktop is based on executing one or more tests by the agent on one or more layers of the virtual desktop site. The method further includes analyzing the fault report and applying a remedial workflow for the fault report to resolve the at least one fault detected in the virtual desktop of the client device.

## Description

### FIELD OF THE DISCLOSURE

The present subject matter generally relates to field of virtual desktops. More particularly, the present disclosure discloses a method and system for resolving faults in a virtual desktop environment.

### BACKGROUND

Companies these days are increasingly having a global workforce to take advantage of outsourcing work to countries in different geographies. As time zones are different in the different geographies, it is guaranteed that at least one team will be working at any time, thereby increasing productivity of a company.

In order to accommodate multiple workers working simultaneously, virtual desktops were provisioned for shift employees. The virtual desktops are typically provisioned from a virtual desktop site at a data center which is located centrally. The shift employees simultaneously connect to the virtual desktops, with similar characteristics, from remote office locations that are spread across the different geographies. In such a scenario, any system failure impacts entire batch of the shift employees and has multifold implications.

Further, deployment of the virtual desktops is complex and involves collaboration between many different layers. Hence, it is usually difficult to detect faults in advance. Application of a general infrastructure availability test is insufficient and more often misleading. For instance, availability of virtual desktop infrastructure service is not enough to ensure availability of the virtual desktops for the shift employees. Moreover, there is no automated interaction between virtual desktop site and user site. Human intervention is also required at both locations to resolve the faults. Such a process makes detection of the faults as well as remediation of the faults both difficult and time consuming.

### SUMMARY

Embodiments of present disclosure disclose a method of resolving faults in a virtual desktop environment. The method includes receiving, by a central monitor of a data center, a plurality of fault reports from one or more client devices. A fault report of the plurality of fault reports includes at least one fault detected by an agent running in a client device of the one or more client devices. The client device operates a virtual desktop provisioned at virtual desktop site. The at least one fault detected in the virtual desktop is based on executing one or more tests by the agent on one or more layers of the virtual desktop site. The method further includes analyzing, by the central monitor, the fault report. Moreover, the method includes applying, by the central monitor, a remedial workflow for the fault report to resolve the at least one fault detected in the virtual desktop of the client device.

Disclosed herein is a central monitor hosted by a data center for resolving faults in a virtual desktop environment. The central monitor includes a processor and a memory. The memory is communicatively coupled to the processor. The memory stores processor-executable instructions, which, on execution, causes the processor to receive a plurality of fault reports from one or more client devices. A fault report of the plurality of fault reports includes at least one fault detected by an agent running in a client device of the one or more client devices. The client device operates a virtual desktop provisioned through a virtual desktop site. The at least one fault is detected in the virtual desktop based on executing one or more tests by the agent on one or more layers of the virtual desktop site. The processor is further configured to analyze the fault report and to apply a remedial workflow for the fault report to resolve the at least one fault detected in the virtual desktop of the client device.

Further, the present disclosure comprises a non-transitory computer readable medium including instructions stored thereon that when processed by at least one processor causes a central monitor hosted by a data center to perform operations comprising receiving a plurality of fault reports from one or more client devices. A fault report of the plurality of fault reports includes at least one fault detected by an agent running in a client device of the one or more client devices. The client device operates a virtual desktop provisioned at a virtual desktop site. The at least one fault is detected in the virtual desktop based on executing one or more tests by the agent on one or more layers of the virtual desktop site. Further, the instructions cause the processor to analyze the fault report. Furthermore, the instructions cause the processor to apply a remedial workflow for the fault report to resolve the at least one fault detected in the virtual desktop of the client device.

The foregoing summary is illustrative only and is not intended to be in any way limiting. In addition to the illustrative aspects, embodiments, and features described above, further aspects, embodiments, and features will become apparent by reference to the drawings and the following detailed description.

### BRIEF DESCRIPTION OF THE DRAWINGS

The accompanying drawings, which are incorporated in and constitute a part of this disclosure, illustrate exemplary embodiments and, together with the description, serve to explain the disclosed principles. In the figures, the left-most digit(s) of a reference number identifies the figure in which the reference number first appears. The same numbers are used throughout the figures to reference like features and components. Some embodiments of system and/or methods in accordance with embodiments of the present subject matter are now described, by way of example only, and with reference to the accompanying figures, in which:
FIG. 1 illustrates a virtual desktop environment, in accordance with some embodiments of the present disclosure;
FIG. 2 illustrates a data center in a virtual desktop environment, in accordance with some embodiments of the present disclosure;
FIG. 3 illustrates a client device in a virtual desktop environment, in accordance with other embodiments of the present disclosure;
FIG. 4 illustrates a method flow diagram for resolving faults in a virtual desktop environment, in accordance with some embodiments of the present disclosure;
FIG. 5 is a flow diagram illustrating a method of resolving faults in a virtual desktop environment, in accordance with some embodiments of the present disclosure; and
FIG. 6 illustrates a block diagram of an exemplary computer system for implementing various embodiments, in accordance with some embodiments of the present disclosure.

It should be appreciated by those skilled in the art that any block diagrams herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and executed by a computer or processor, whether or not such computer or processor is explicitly shown.

### DETAILED DESCRIPTION

While the disclosure is susceptible to various modifications and alternative forms, specific embodiment thereof has been shown by way of example in the drawings and will be described in detail below. It should be understood, however that it is not intended to limit the disclosure to the particular forms disclosed, but on the contrary, the disclosure is to cover all modifications, equivalents, and alternative falling within the scope of the disclosure.

In the following detailed description of the embodiments of the disclosure, reference is made to the accompanying drawings that form a part hereof, and in which are shown by way of illustration specific embodiments in which the disclosure may be practiced. These embodiments are described in sufficient detail to enable those skilled in the art to practice the disclosure, and it is to be understood that other embodiments may be utilized and that changes may be made without departing from the scope of the present disclosure. The following description is, therefore, not to be taken in a limiting sense.

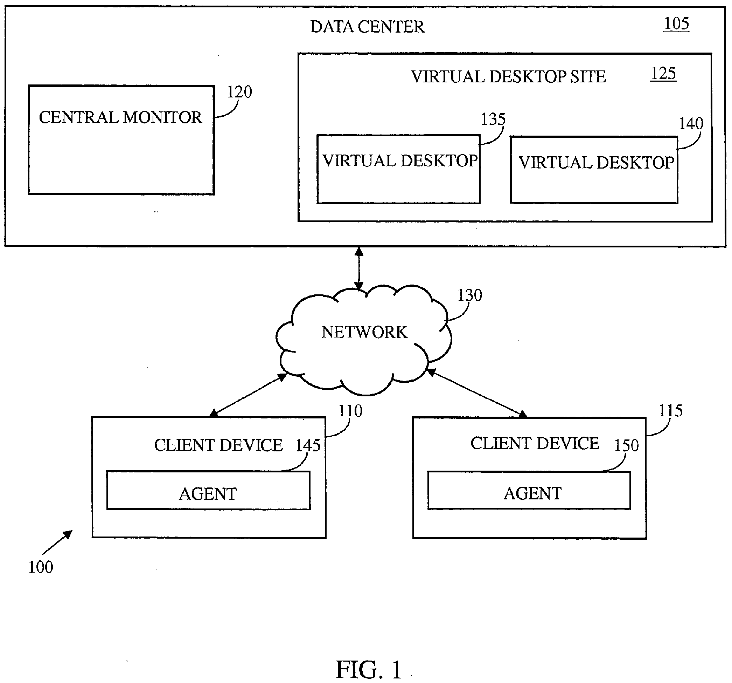

FIG. 1 illustrates a virtual desktop environment 100, in accordance with some embodiments of the present disclosure.

The virtual desktop environment 100 includes a data center 105 and a plurality of client devices, for example a client device 110 and a client device 115. The data center 105 includes a central monitor 120 and a virtual desktop site 125. It will be apparent to a person skilled in the art that the data center 105 includes central monitors other than the central monitor 120, and virtual desktop sites other than the virtual desktop site 125. The central monitor 120 can communicate with the client device 110 and the client device 115 through a network 130. Examples of the network 130 include, but are not limited to, a local area network (LAN), a wide area network (WAN), a wireless network, Internet, and the like.

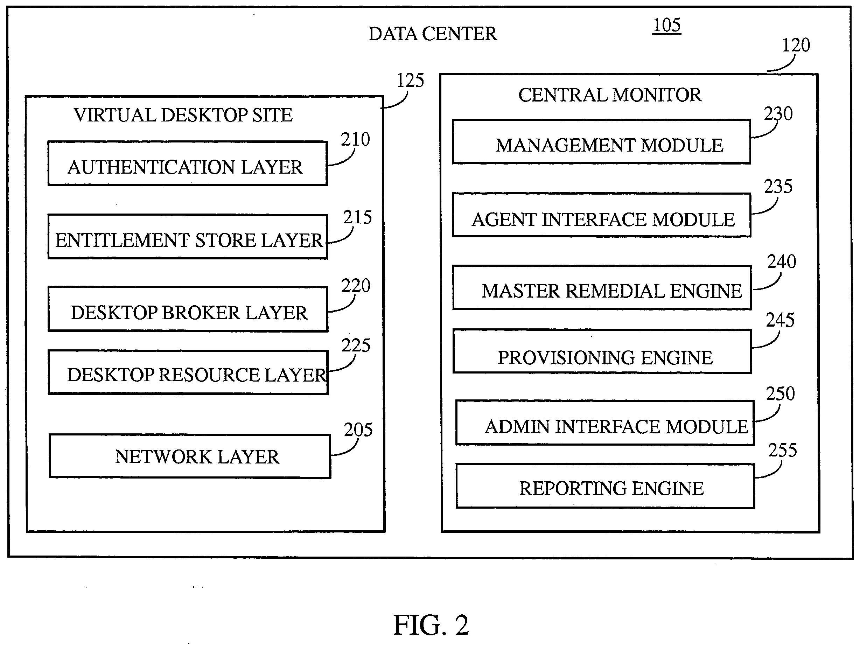

The virtual desktop site 125 includes one or more layers and one or more virtual desktops, for example a virtual desktop 135 and a virtual desktop 140. The one or more layers include an authentication layer, an entitlement store layer, a desktop broker layer, and a desktop resource layer. The layers are discussed in detail with reference to FIG. 2. The central monitor 120 refers to a process installed in the data center 105 that is responsible to control agents installed in the client devices. Each client device, for example the client device 110 or the client device 115, hosts an agent. The agent in each client device refers to an application installed on the client device 110 or the client device 115. In an example, the client device 110 hosts an agent 145 and the client device 115 hosts an agent 150. It will be apparent to a person skilled in the art that the data center 105 may include more than one central monitor and that each client device can include more than one agent.

The agent 145 of the client device 110 may access the central monitor 120 by using a web browser on the client device 110. The agent 145 in the client device 110 executes one or more tests on the one or more layers of the virtual desktop site. A fault report is generated and communicated to the central monitor 120. The fault report includes details of at least one fault detected by the agent 145 in the client device 110. The central monitor 120 of the data center 105 receives a plurality of fault reports from one or more client devices, for example the fault report from the agent 145 in the client device 110 and a fault report from the agent 150 in the client device 115. The central monitor 120 of the data center 105 analyzes each fault report, for example the fault report from the client device 110. The central monitor 120 further applies a remedial workflow for the fault report to resolve the at least one fault detected in the virtual desktop of the client device 110.

The data center 105 including the virtual desktop site 140 and the central monitor 120 is described in detail with reference to FIG. 2.

Referring now to FIG. 2, the data center 105 in the virtual desktop environment 100 is illustrated, in accordance with some embodiments of the present disclosure. The data center 105 includes the virtual desktop site 125 and the central monitor 120. The virtual desktop site 140 additionally includes a network layer 205 configured to handle one or more network failure cases.

The virtual desktop site 140 includes the one or more layers. The one or more layers include an authentication layer 210, an entitlement store layer 215, a desktop broker layer 220, and a desktop resource layer 225. The virtual desktop site 140 is configured to handle delivery of virtual desktops to the client devices. The virtual desktop site 140 is further configured to receive the remedial workflows applied by the central monitor 120.

The authentication layer 210 receives a request for a virtual desktop from a client device. The authentication layer 210 is configured to authenticate a user associated with the client device. For example, test user credentials submitted by the client device 110 and the test user credentials submitted by the client device 115 are authenticated in the authentication layer 210. Some examples of faults that occur in the authentication layer 210 include, but are not limited to, a fault generated when an authentication request has not reached the authentication layer 210 in cases of network failure, and a fault generated when the authentication layer 210 is unable to authenticate the users if an enterprise authentication service is unavailable.

The entitlement store layer 215 is configured to enumerate user resources provisioned in the virtual desktops and entitled to the user. Examples of the user resources include virtual desktops and applications. Some examples of faults that occur in the entitlement store layer 215 include, but are not limited to, a fault generated when an entitlement store service is unavailable, and a fault generated when a database of the virtual desktop site 140 faces failure.

The desktop broker layer 220 is configured to provision the user resources and enable the users to use the user resources. Some examples of faults that occur in the desktop broker layer 220 include, but are not limited to, a fault generated when there is a service failure in the desktop broker layer 220, and a fault generated when there is a failure in the agent of the client device.

The desktop resource layer 225 is configured to store the user resources. Some examples of faults that occur in the desktop resource layer 225 include, but are not limited to, a fault generated when the virtual desktop is in an inconstant state, a fault generated when there are no free user resources available, and a fault generated due to failure of an application host.

The request for a virtual desktop from a client device has to pass through all of the above layers in the virtual desktop site 140 to be successful.

The central monitor 120 includes a management module 230, an agent interface module 235, a master remedial engine 240, a provisioning engine 245, an admin interface module 250, and a reporting engine 255.

The management module 230 is configured to manage modules in the central monitor 120.

The agent interface module 235 is configured to handle communication with the agents installed in the client devices.

The master remedial engine 240 is responsible to coordinate remedial actions of the remedial workflow applied by the central monitor 120. The master remedial engine 240 triggers the remedial actions of the remedial workflow on the virtual desktop site 140 based on the faults reported in the fault reports by the agents in the client devices.

The provisioning engine 245 is configured to provision an alternate virtual desktop to the client device if the at least one fault is unresolved with the remedial workflow. The alternate virtual desktop is, for example, provisioned during an emergency situation when the remedial workflow fails.

The admin interface module 250 is a machine interface for configuring solution parameters. Examples of the solution parameters include, but are not limited to, test schedule, test parameters, and the like. The admin interface module 250 can be coupled to a management console module in the data center 105.

The reporting engine 255 is configured to prepare incident reports. The incident report is prepared when the at least one fault is unresolved with the remedial workflow. The reporting engine 255 is further responsible to raise an alert, for example to administrators, based on the incident report from the agent. In some examples, the alert includes a short message service (SMS), an electronic mail to the administrators, and the like.

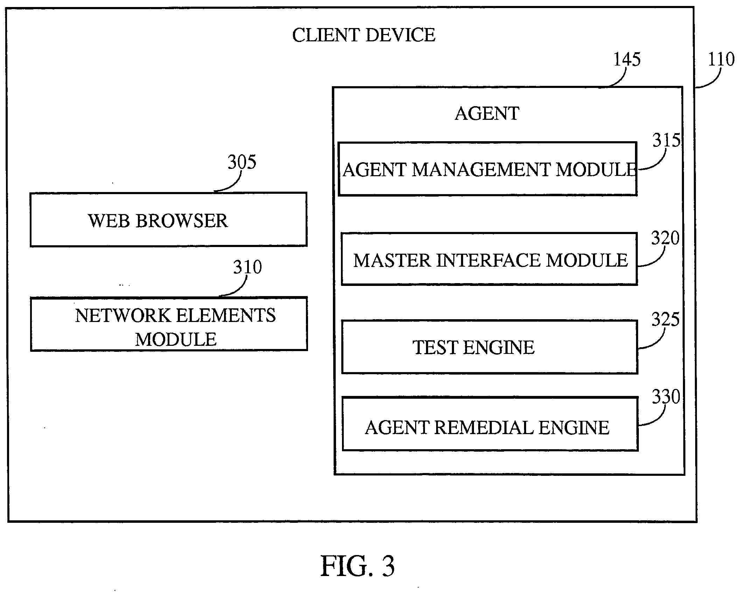

The client device, for example the client device 110 including the agent 145, is explained in detail with reference to FIG. 3.

Referring now to FIG. 3, the client device 110 in the virtual desktop environment 100 is illustrated, in accordance with some embodiments of the present disclosure. The client device 110 includes the agent 145 and a web browser 305. The web browser 305 is used by the agent 145 to conduct the one or more tests. The client device 110 additionally includes a network elements module 310 configured to consider network parameters for fine tuning. Examples of the network parameters include, but are not limited to, bandwidth, alternate network path configurations to use during primary network path failure, and the like.

The agent 145 includes an agent management module 315, a master interface module 320, a test engine 325, and an agent remedial engine 330.

The agent management module 315 is configured to manage modules in the agent 145.

The master interface module 320 is configured to handle communication with the central monitor 120 hosted by the virtual desktop site 140 in the data center 105.

The test engine 325 is configured to execute the one or more tests by the agent 145 on one or more layers of the virtual desktop site 140 to detect the at least one fault in the virtual desktop.

The agent remedial engine 330 is optionally used in the agent 145 to perform network configurations on a user site in the client device.

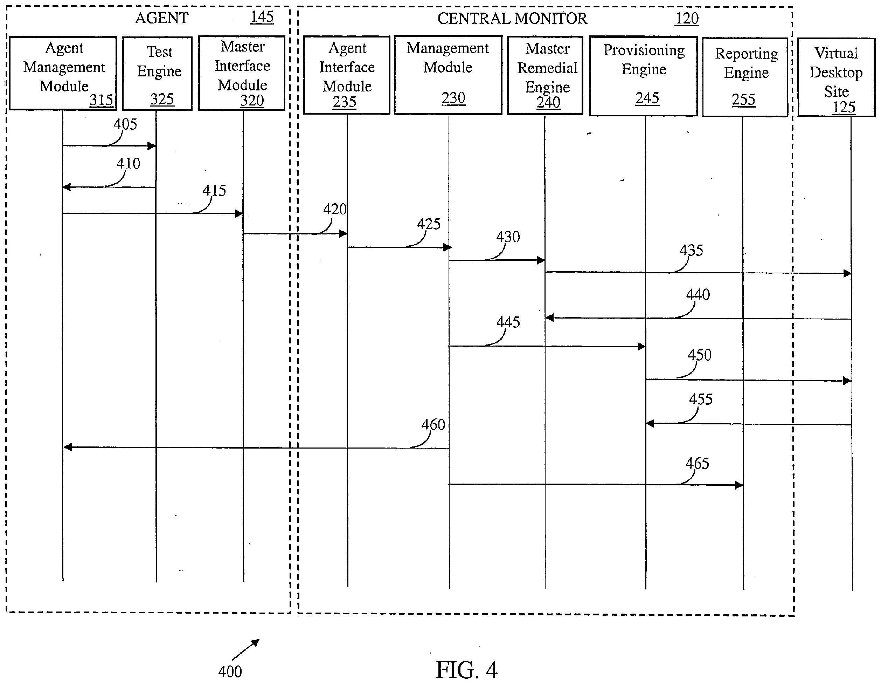

A method flow diagram detailing functions of the agent 145, the central monitor 120 and the virtual desktop site 140 is explained in detail with reference to FIG. 4.

Referring now to FIG. 4, a method flow diagram 400 is illustrated, in accordance with some embodiments of the present disclosure. At step 405, the agent management module 315 of the agent 145 triggers execution of one or more tests by sending appropriate instructions to the test engine 325 of the agent 145. An agent at a user site will execute the tests and identifies faults and reports them to master process running at the virtual desktop site 125.

At step 410, the test engine 325 executes the one or more tests based on the instructions from the agent management module 315 and detects at least one fault. A fault report is generated and transmitted to the agent management module 315.

At step 415, the agent management module 315 transmits the fault report to the master interface module 320 of the agent 145 in order to report failures to the central monitor 120.

At step 420, the master interface module 320 transmits the fault report to the agent interface module 235 of the central monitor 120.

At step 425, the agent interface module 235 transmits the fault report to the management module 230 of the central monitor 120.

At step 430, the management module 230 analyses the fault report and sends instructions to the master remedial engine 240 of the central monitor 120 to trigger application of a remedial workflow including one or more remedial actions.

At step 435, the master remedial engine 240 applies the remedial workflow to the virtual desktop site 140.

At step 440, the virtual desktop site 140 transmits the results of the remedial workflow to the master remedial engine 240. The results of the remedial workflow results are further consolidated by the management module 230.

At step 445, the management module 230 checks the results. If it is determined that the at least one fault is unresolved with the remedial workflow or that an emergency case exists, alternate actions may be triggered by instructing the provisioning engine 245 of the central monitor 120 accordingly.

At step 450, the provisioning engine 245 executes an alternate remedial workflow or provisions an alternate virtual desktop to the virtual desktop site 140.

At step 455, the virtual desktop site 140 transmits the results of the execution of the alternate remedial workflow to the provisioning engine 245. The results of the execution of the alternate remedial workflow are further consolidated by the management module 230.

At step 460, the management module 230 verifies fault resolution of the at least one fault with the agent 145 of the client device 110 based on checking the results with the agent management module 315 of the agent 145. If it is determined that the at least one fault is unresolved with the remedial workflow or the alternate remedial workflow, an incident report is received from the agent 145.

At step 465, the management module 230 analyses the incident report and raises an alert to the reporting engine 255 of the central monitor 120. In cases of the management module 230 receiving a plurality of fault reports or incident reports from different agents, the management module 230 prioritizes and analyses such reports in a sequential order. The reporting engine 255 can further send the incident reports to the administrator through the admin interface module 250.

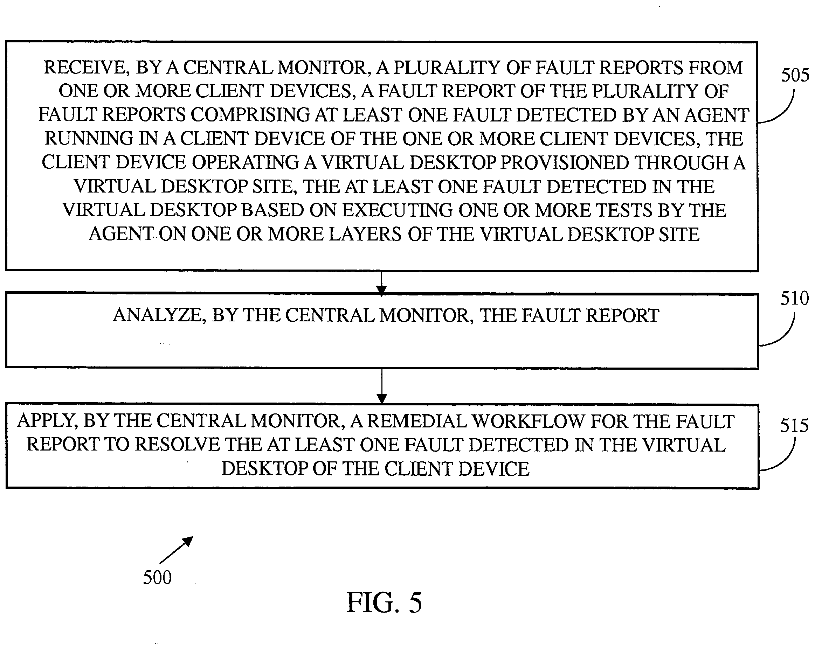

FIG. 5 is a flow diagram illustrating a method 500 of resolving faults in a virtual desktop environment, for example the virtual desktop environment 100 of FIG. 1, in accordance with some embodiments of the present disclosure.

The order in which the method is described is not intended to be construed as a limitation, and any number of the described method blocks can be combined in any order to implement the method. Additionally, individual blocks may be deleted from the method without departing from the scope of the subject matter described herein.

At step 505, the method 500 includes receiving, by a central monitor of a data center, a plurality of fault reports from one or more client devices. For instance, the central monitor 120 of the data center 105 receives a fault report from the client device 110. The fault report of the plurality of fault reports includes at least one fault detected by an agent, for example the agent 145, running in a client device, for example the client device 110 of FIG. 1, of the one or more client devices. The client device operates a virtual desktop provisioned by the central monitor through a virtual desktop site, for example the virtual desktop site 140. The at least one fault detected in the virtual desktop is based on executing one or more tests by the agent on one or more layers of the virtual desktop site. The one or more layers of the virtual desktop site includes an authentication layer, an entitlement store layer, a desktop broker layer, and a desktop resource layer. The one or more layers of the virtual desktop site are explained in detail with reference to FIG. 2 and are not explained herein for sake of brevity.

In some embodiments, the plurality of fault reports from the one or more client devices are prioritized by the central monitor of the data center in order to be analyzed in a sequential order.

In some embodiments, the virtual desktop is accessed by a user of the client device by providing one or more user credentials.

An example fault report generated from the agent, for example an agent located in Boston, of the client device is illustrated in Table 1 below.

**Table 1**

| Desktop Pool | Access | Authentication | Brokering | Desktop Launch | Launch Time (Sec) | Network Latency (millisec) | Desktop Responsiveness Test | Application Launch Time (Sec) |
|---|---|---|---|---|---|---|---|---|
| HSD_pool5 | Pass | Pass | Pass | Pass | 60 | 30 | fast | 10 |
| Windows7_pool8 | Pass | Pass | Pass | Pass | 35 | 98 | Average | 24 |
| Win10_private_pool6 | Pass | Pass | Pass | Pass | 110 | 235 | Slow | 12 |
| App_pool2 | Pass | Pass | Fail | NA | NA | NA | NA | NA |

As illustrated in the Table 1 above, the fault report includes details of a desktop pool of the virtual desktops, and details of any fault occurrence during each step in a test workflow. For instance during access, in the authentication layer, in the desktop brokering layer, during desktop launch and desktop responsiveness test results. The fault report also includes numerical details of launch time of the virtual desktops in seconds, network latency in milliseconds, and application launch time in seconds. In some embodiments, the agent runs the test workflow for one desktop in each desktop pool that is configured as each desktop pool behaves differently.

At step 510, the method 500 includes analyzing the fault report by the central monitor of the data center. The method of analyzing the fault report is explained with reference to FIG. 4 is not explained herein for sake of brevity.

At step 515, the method 500 includes applying, by the central monitor of the data center, a remedial workflow for the fault report to resolve the at least one fault detected in the virtual desktop of the client device. The method of applying the remedial workflow for the fault report is explained with reference to FIG. 4 and is not explained herein for sake of brevity.

The method 500 also includes verifying, by the central monitor of the data center, fault resolution of the at least one fault with the agent of the client device.

The method 500 further includes receiving, by the central monitor of the data center, an incident report from the agent if the at least one fault is unresolved with the remedial workflow. An alert may be raised, by the central monitor of the data center, based on the incident report from the agent.

An example incident report generated from the agent of the client device is illustrated in Table 2 below.

**Table 2**

| Agent Location | Incident Details | Actions Performed | Result | Time Stamp |
|---|---|---|---|---|
| India | Network link failure | Switch over to redundant line | Pass | 10-Dec-2016 10:12 |
| London | Free resource not available for pool12 | Provisioned two additional hosts | Pass | 10-Dec-2016 13:16 |
| Boston | Pool2 machines failed to launch | Reason Identified: 20 out of 50 desktop agent failed to register | Pass | 10-Dec-2016 15:14 |
| | | Actions: Restart agents, triggered registration | | |
| Singapore | Profiles not loading | Reason Identified: Service controller service stopped running. | Fail | 10-Dec-2016 21:12 |
| | | Actions: Service restart failed. Sent SMS to Admin | | |

As illustrated in the Table 2 above, the incident report includes details of agent location, incident details, actions performed to remediate, result of the actions and time stamp. In some embodiments, further details at each step, error messages observed, issue dumps may also be captured in application log files. The incident reports and the application log files help administrators to analyze and to improve remedial workflows.

The method 500 further includes provisioning, by the central monitor of the data center, an alternate virtual desktop to the client device if the at least one fault is unresolved with the remedial workflow.

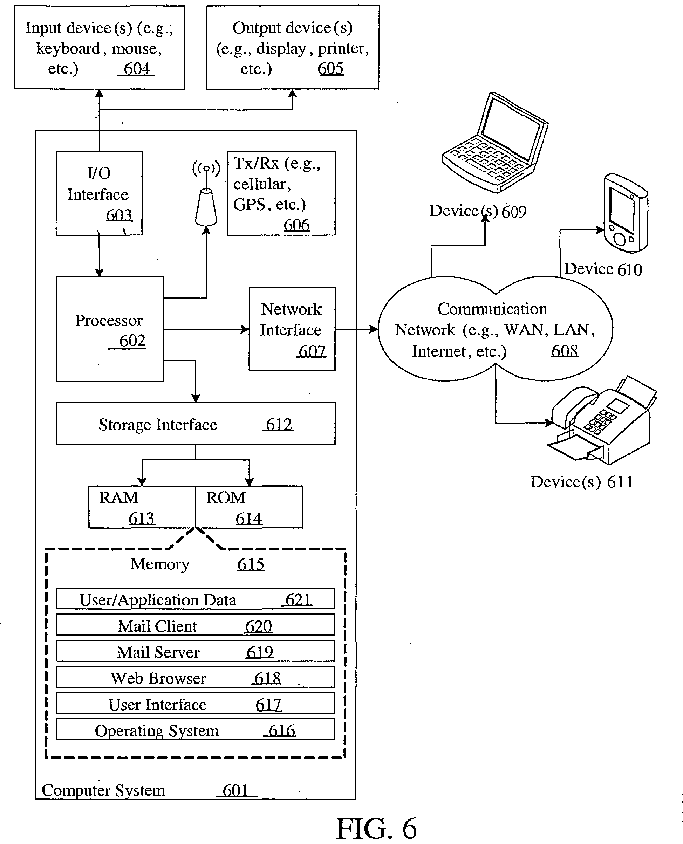

FIG. 6 illustrates a block diagram of an exemplary computer system for implementing embodiments consistent with the present disclosure. Variations of computer system 601 may be used for performing optical character recognition on an image including a plurality of printed characters. The computer system 601 may comprise a central processing unit ("CPU" or "processor") 602. Processor 602 may comprise at least one data processor for executing program components for executing user- or system-generated requests. A user may include a person, a person using a device such as such as those included in this disclosure, or such a device itself. The processor may include specialized processing units such as integrated system (bus) controllers, memory management control units, floating point units, graphics processing units, digital signal processing units, etc. The processor may include a microprocessor, such as AMD Athlon, Duron or Opteron, ARM's application, embedded or secure processors, IBM PowerPC, Intel's Core, Itanium, Xeon, Celeron or other line of processors, etc. The processor 602 may be implemented using mainframe, distributed processor, multi-core, parallel, grid, or other architectures. Some embodiments may utilize embedded technologies like application-specific integrated circuits (ASICs), digital signal processors (DSPs), Field Programmable Gate Arrays (FPGAs), etc.

Processor 602 may be disposed in communication with one or more input/output (I/O) devices via I/O interface 603. The I/O interface 603 may employ communication protocols/methods such as, without limitation, audio, analog, digital, monoaural, RCA, stereo, IEEE-1394, serial bus, universal serial bus (USB), infrared, PS/2, BNC, coaxial, component, composite, digital visual interface (DVI), high-definition multimedia interface (HDMI), RF antennas, S-Video, VGA, IEEE 802.n /b/g/n/x, Bluetooth, cellular (e.g., code-division multiple access (CDMA), high-speed packet access (HSPA+), global system for mobile communications (GSM), long-term evolution (LTE), WiMax, or the like), etc.

Using the I/O interface 603, the computer system 601 may communicate with one or more I/O devices. For example, the input device 604 may be an antenna, keyboard, mouse, joystick, (infrared) remote control, camera, card reader, fax machine, dongle, biometric reader, microphone, touch screen, touchpad, trackball, sensor (e.g., accelerometer, light sensor, GPS, gyroscope, proximity sensor, or the like), stylus, scanner, storage device, transceiver, video device/source, visors, etc. Output device 605 may be a printer, fax machine, video display (e.g., cathode ray tube (CRT), liquid crystal display (LCD), light-emitting diode (LED), plasma, or the like), audio speaker, etc. In some embodiments, a transceiver 606 may be disposed in connection with the processor 602. The transceiver may facilitate various types of wireless transmission or reception. For example, the transceiver may include an antenna operatively connected to a transceiver chip (e.g., Texas Instruments WiLink WL1283, Broadcom BCM4750IUB8, Infineon Technologies X-Gold 618-PMB9800, or the like), providing IEEE 802.11a/b/g/n, Bluetooth, FM, global positioning system (GPS), 2G/3G HSDPA/HSUPA communications, etc.

In some embodiments, the processor 602 may be disposed in communication with a communication network 608 via a network interface 607. The network interface 607 may communicate with the communication network 608. The network interface may employ connection protocols including, without limitation, direct connect, Ethernet (e.g., twisted pair 10/100/1000 Base T), transmission control protocol/internet protocol (TCP/IP), token ring, IEEE 802.11a/b/g/n/x, etc. The communication network 608 may include, without limitation, a direct interconnection, local area network (LAN), wide area network (WAN), wireless network (e.g., using Wireless Application Protocol), the Internet, etc. Using the network interface 607 and the communication network 608, the computer system 601 may communicate with devices 610, 611, and 612. These devices may include, without limitation, personal computer(s), server(s), fax machines, printers, scanners, various mobile devices such as cellular telephones, smartphones (e.g., Apple iPhone, Blackberry, Android-based phones, etc.), tablet computers, eBook readers (Amazon Kindle, Nook, etc.), laptop computers, notebooks, gaming consoles (Microsoft Xbox, Nintendo DS, Sony PlayStation, etc.), or the like. In some embodiments, the computer system 601 may itself embody one or more of these devices.

In some embodiments, the processor 602 may be disposed in communication with one or more memory devices (e.g., RAM 613, ROM 614, etc.) via a storage interface 612. The storage interface may connect to memory devices including, without limitation, memory drives, removable disc drives, etc., employing connection protocols such as serial advanced technology attachment (SATA), integrated drive electronics (IDE), IEEE-1394, universal serial bus (USB), fiber channel, small computer systems interface (SCSI), etc. The memory drives may further include a drum, magnetic disc drive, magneto-optical drive, optical drive, redundant array of independent discs (RAID), solid-state memory devices, solid-state drives, etc.

The memory devices may store a collection of program or database components, including, without limitation, an operating system 616, user interface application 617, web browser 618, mail server 619, mail client 620, user/application data 621 (e.g., any data variables or data records discussed in this disclosure), etc. The operating system 616 may facilitate resource management and operation of the computer system 601. Examples of operating systems include, without limitation, Apple Macintosh OS X, UNIX, Unix-like system distributions (e.g., Berkeley Software Distribution (BSD), FreeBSD, NetBSD, OpenBSD, etc.), Linux distributions (e.g., Red Hat, Ubuntu, Kubuntu, etc.), IBM OS/2, Microsoft Windows (XP, Vista/7/8, etc.), Apple iOS, Google Android, Blackberry OS, or the like. User interface 617 may facilitate display, execution, interaction, manipulation, or operation of program components through textual or graphical facilities. For example, user interfaces may provide computer interaction interface elements on a display system operatively connected to the computer system 601, such as cursors, icons, check boxes, menus, scrollers, windows, widgets, etc. Graphical user interfaces (GUIs) may be employed, including, without limitation, Apple Macintosh operating systems' Aqua, IBM OS/2, Microsoft Windows (e.g., Aero, Metro, etc.), Unix X-Windows, web interface libraries (e.g., ActiveX, Java, Javascript, AJAX, HTML, Adobe Flash, etc.), or the like.

In some embodiments, the computer system 601 may implement a web browser 618 stored program component. The web browser may be a hypertext viewing application, such as Microsoft Internet Explorer, Google Chrome, Mozilla Firefox, Apple Safari, etc. Secure web browsing may be provided using HTTPS (secure hypertext transport protocol), secure sockets layer (SSL), Transport Layer Security (TLS), etc. Web browsers may utilize facilities such as AJAX, DHTML, Adobe Flash, JavaScript, Java, application programming interfaces (APIs), etc. In some embodiments, the computer system 601 may implement a mail server 619 stored program component. The mail server 619 may be an Internet mail server such as Microsoft Exchange, or the like. The mail server 619 may utilize facilities such as ASP, ActiveX, ANSI C++/C#, Microsoft .NET, CGI scripts, Java, JavaScript, PERL, PHP, Python, WebObjects, etc. The mail server 619 may utilize communication protocols such as internet message access protocol (IMAP), messaging application programming interface (MAPI), Microsoft Exchange, post office protocol (POP), simple mail transfer protocol (SMTP), or the like. In some embodiments, the computer system 601 may implement a mail client 620 stored program component. The mail client may be a mail viewing application, such as Apple Mail, Microsoft Entourage, Microsoft Outlook, Mozilla Thunderbird, etc.

In some embodiments, computer system 601 may store user/application data 621, such as the data, variables, records, etc. as described in this disclosure. Such databases may be implemented as fault-tolerant, relational, scalable, secure databases such as Oracle or Sybase. Alternatively, such databases may be implemented using standardized data structures, such as an array, hash, linked list, struct, structured text file (e.g., XML), table, or as object-oriented databases (e.g., using ObjectStore, Poet, Zope, etc.). Such databases may be consolidated or distributed, sometimes among the various computer systems discussed above in this disclosure. It is to be understood that the structure and operation of the any computer or database component may be combined, consolidated, or distributed in any working combination.

Furthermore, one or more computer-readable storage media may be utilized in implementing embodiments consistent with the present invention. A computer-readable storage medium refers to any type of physical memory on which information or data readable by a processor may be stored. Thus, a computer-readable storage medium may store instructions for execution by one or more processors, including instructions for causing the processor(s) to perform steps or stages consistent with the embodiments described herein. The term "computer-readable medium" should be understood to include tangible items and exclude carrier waves and transient signals, i.e., non-transitory. Examples include Random Access Memory (RAM), Read-Only Memory (ROM), volatile memory, nonvolatile memory, hard drives, Compact Disc (CD) ROMs, Digital Video Disc (DVDs), flash drives, disks, and any other known physical storage media.

Embodiments of the present disclosure provide a method and system for resolving faults in a virtual desktop environment. The present disclosure provides proactive detection of issues before actual usage of the virtual desktop by a user. The present disclosure ensures that remote users can access the virtual desktop site successfully. The test workflow provided is comprehensive and tests end-to-end layers in the virtual desktop environment. The present disclosure further provides objective evidence of time it takes for the remote users to connect, specifically with regard to location specific connection issues and delays. Further, remedial actions are automatically triggered. The present disclosure also reduces productivity losses and eliminates penalties.

A description of an embodiment with several components in communication with each other does not imply that all such components are required. On the contrary a variety of optional components are described to illustrate the wide variety of possible embodiments of the invention.

Finally, the language used in the specification has been principally selected for readability and instructional purposes. The scope of the invention is to be limited only by the claims that issue on an application based here on. Accordingly, the embodiments of the present invention are intended to be illustrative, but not limiting, of the scope of the invention, which is set forth in the following claims.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

The present disclosure may be realized in hardware, or a combination of hardware and software. The present disclosure may be realized in a centralized fashion, in at least one computer system, or in a distributed fashion, where different elements may be spread across several interconnected computer systems. A computer system or other apparatus adapted for carrying out the methods described herein may be suited. A combination of hardware and software may be a general-purpose computer system with a computer program that, when loaded and executed, may control the computer system such that it carries out the methods described herein. The present disclosure may be realized in hardware that comprises a portion of an integrated circuit that also performs other functions.

A person with ordinary skills in the art will appreciate that the systems, modules, and sub-modules have been illustrated and explained to serve as examples and should not be considered limiting in any manner. It will be further appreciated that the variants of the above disclosed system elements, modules, and other features and functions, or alternatives thereof, may be combined to create other different systems or applications.

Those skilled in the art will appreciate that any of the aforementioned steps and/or system modules may be suitably replaced, reordered, or removed, and additional steps and/or system modules may be inserted, depending on the needs of a particular application. In addition, the systems of the aforementioned embodiments may be implemented using a wide variety of suitable processes and system modules, and are not limited to any particular computer hardware, software, middleware, firmware, microcode, and the like. The claims can encompass embodiments for hardware and software, or a combination thereof.

While various aspects and embodiments have been disclosed herein, other aspects and embodiments will be apparent to those skilled in the art. The various aspects and embodiments disclosed herein are for purposes of illustration and are not intended to be limiting, with the true scope being indicated by the following claims.

## Claims

1. A method of resolving faults in a virtual desktop environment, the method comprising:
receiving, by a central monitor of a data center, a plurality of fault reports from one or more client devices, one of the plurality of fault reports comprising at least one fault detected by an agent running in one of the one or more client devices, said client device operating a virtual desktop provisioned at a virtual desktop site, said at least one fault being detected in the virtual desktop based on executing one or more tests by the agent on one or more layers of the virtual desktop site;
analyzing, by the central monitor, the fault report; and
applying, by the central monitor, a remedial workflow for the fault report to resolve the at least one fault detected in the virtual desktop of the client device.

2. The method as claimed in claim 1 and further comprising:
verifying, by the central monitor of the data center, fault resolution of the at least one fault with the agent of the client device.

3. The method as claimed in claim 2 and further comprising:
receiving, by the central monitor of the data center, an incident report from the agent if the at least one fault is unresolved with the remedial workflow.

4. The method as claimed in claim 3 and further comprising:
raising, by the central monitor of the data center, an alert based on the incident report from the agent.

5. The method as claimed in any preceding claim, wherein receiving the plurality of fault reports comprises:
prioritizing, by the central monitor of the data center, the plurality of fault reports from the one or more client devices to be analyzed in a sequential order.

6. The method as claimed in any preceding claim, and further comprising:
provisioning, by the central monitor of the data center, an alternate virtual desktop to the client device if the at least one fault is unresolved with the remedial workflow.

7. The method as claimed in any preceding claim, wherein the virtual desktop is accessed by a user of the client device by providing one or more user credentials.

8. The method as claimed in any preceding claim, wherein the one or more layers of the virtual desktop site comprises an authentication layer, an entitlement store layer, a desktop broker layer, and a desktop resource layer.

9. A central monitor hosted by a data center for resolving faults in a virtual desktop environment, the central monitor comprising:
a processor; and
a memory, communicatively coupled to the processor, wherein the memory stores processor-executable instructions, which, on execution, causes the processor to perform the method of any preceding claim.

10. A non-transitory computer readable medium including instructions stored thereon that when processed by at least one processor causes a central monitor hosted by a data center to perform operations comprising the method of any of claims 1 - 8.
